Europäisches Patentamt

(19) European Patent Office

Office européen des brevets

(11) Publication number:

**0 167 289**
**A2**

(12) **EUROPEAN PATENT APPLICATION**

(21) Application number: **85303904.8**

(51) Int. Cl.⁴: **G 02 B 6/04**

(22) Date of filing: **03.06.85**

(30) Priority: **07.06.84 JP 84845/84 U**

(43) Date of publication of application:
**08.01.86 Bulletin 86/2**

(84) Designated Contracting States:
**DE FR GB IT**

(71) Applicant: **Wacom Co., Ltd.**
**5-23-4, Sakurada Washinomiya-cho**
**Kitakatsushika-gun Saitama-ken, 340-02(JP)**

(72) Inventor: **Eto, Yoji**
**World House 3-44-2, Takadanobaba**
**Shinjuku-ku Tokyo 160(JP)**

(72) Inventor: **Sawa, Hideo**
**205 Tsutsumi Heights 5-36, Higashi 2-chome**
**Kuki-shi Saitama-ken 346(JP)**

(74) Representative: **Harrison, David Christopher et al,**
**MEWBURN ELLIS & CO 2/3 Cursitor Street**
**London EC4A 1BQ(GB)**

(54) **Transparency apparatus.**

㉗ A transparency apparatus has a generally rectangular tabular light guide plate (1) having a flat upper surface (11), the underside of the light guide plate having at least one tapered surface (15,16) which extends from near a light-receiving end surface (13,14) of the light guide plate such as to progressively approach the flat upper surface of the light guide plate. The tapered surface is provided with fine convexities and concavities. The portion (17) of the upper surface opposing the tapered surface presents an area on which an observation plate is to be seated and the transparency can be placed on the observation plate.

EP 0 167 289 A2

FIG. 1

# TRANSPARENCY APPARATUS

The present invention relates to a transparency apparatus for observing originals such as negative or positive films, Roentgen photos and so forth.

In recent years, there has been an increasing demand for a tablet-type inputting device referred to as a "digitizer", as a means for inputting data, in particular image information, to computers.

For inputting the data or image information to a computer through a digitizer, an original carrying the image information to be inputted is placed on a tablet having position detecting lines arranged in X- and Y-directions, and the user traces the profile of the image by, for example, a position appointing device such as a stylus pen. In some cases, the original carrying the image information takes the form of a negative or positive film, Roentgen photograph or the like. In order to trace the image information on such a type of original, it is necessary to use a transparency device which incorporates a translucent plate on which the original is placed, and a light source disposed under the translucent plate and adapted to illuminate the original through the translucent plate from the lower side thereof.

Hitherto, the transparency device of the kind described makes use of fluorescent tubes as the light source. Since the fluorescent tubes are disposed beneath the translucent plate, the transparency device inevitably has a thickness which is greater than the diameter of the fluorescent tubes.

On the other hand, when writing image information in a digitizer, the position appointing device cannot be positioned too far from the tablet of the digitizer, due to reasons concerning the characteristics of the digitizer. This in turn makes it impossible to input the image information through the transparency device placed on the tablet.

In order to obviate this problem, it has been proposed that the thickness of the transparency device be reduced by making use of tabular EL light-emitting elements in place of the translucent tubes. The use of expensive EL light-emitting elements, however, undesirably raises the cost of the system as a whole.

Accordingly, an object of the invention is to provide a transparency apparatus for transparency observation of an original such as a photographic film placed on a translucent observation plate, comprising: a generally rectangular tabular light guide plate having a flat upper surface, the underside of the light guide plate having at least one tapered surface which extends from a portion of the light guide plate near one longitudinal end surface of the light guide plate towards the other end such as to progressively approach the flat upper surface of the light guide plate, the portion of the upper surface opposing the tapered surface presenting an area on which the observation plate is to be seated; and a light source means from which a light is introduced into the light guide plate through the one end surface of the light guide plate.

According to this arrangement, the greater part of the light introduced through one end surface of the light guide plate and reaching the tapered surface is totally reflected and radiated to the upper surface of the liquid guide plate. In general, the light coming into the light guide plate through the incident end surface is attenuated as it travels through the light guide plate to the other end of the plate which is remote from the light source, so that the other end receives a smaller quantity of light than the incident end does. However, according to the invention, the totally reflected light is concentrated in the area near the other end of the light guide plate, so that light is uniformly emitted from the portion of the upper surface of the light guide plate opposing the tapered lower surface of the same. Therefore, by placing a translucent plate of, for example, white color on the above-mentioned portion of the translucent plate, it is possible to obtain an observation surface over which the light is dispersed uniformly.

A second object of the invention is to provide a transparency apparatus of the type mentioned above, further comprising fine convexities and concavities formed on the tapered surface of the light guide plate, and a reflecting mirror disposed such as to oppose the tapered surface of the light guide plate.

According to this arrangement, the light introduced through one end surface of the light guide plate is irregularly reflected by the fine convexities and concavities on the tapered surface of the light guide plate, and the portion of the light directed to the reflecting mirror is reflected by the mirror towards the upper surface of the light guide plate such as to be emitted uniformly and efficiently from the portion of the upper surface of the light guide plate opposite the tapered surface.

A third object of the invention is to provide a transparency apparatus having a light source body disposed in the vicinity of one end surface of the light guide plate.

With this arrangement, the overall thickness of the transparency apparatus as a whole can be reduced because the light source is not disposed under the light guide plate.  In consequence, it becomes possible to use the transparency apparatus while the same is placed on a digitizer, thus facilitating the inputting of the image information on a negative or positive film, a Roentgen photo or the like.

A fourth object of the invention is to provide a simple and inexpensive transparency apparatus which can be constituted by easily available parts such as an acrylic plate, reflecting mirror and so forth, without necessitating the use of a special light source such as EL light-emitting elements.

The above and other objects, features and advantages of the invention will become clear from the following description of the preferred embodiments when the same is read in conjunction with the accompanying drawings.

Fig. 1 is an exploded perspective view of an essential part of the light source incorporated in a transparency apparatus in accordance with the invention;

Fig. 2 is a sectional view showing light paths in the transparency apparatus shown in Fig. 1;

Fig. 3 is a perspective view of the whole portion of the transparency apparatus in accordance with the invention; and

Fig. 4 is a partial sectional view of the apparatus shown in Fig. 3.

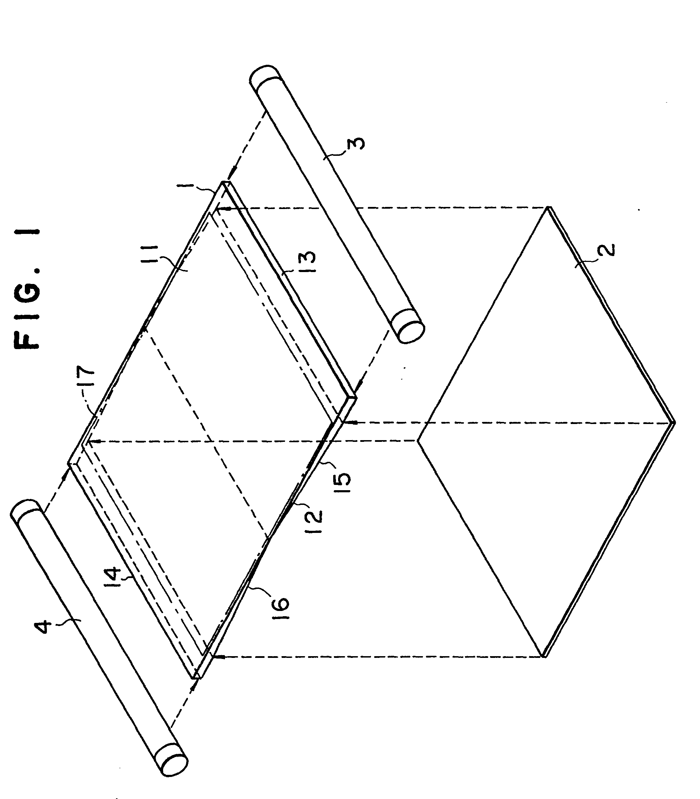

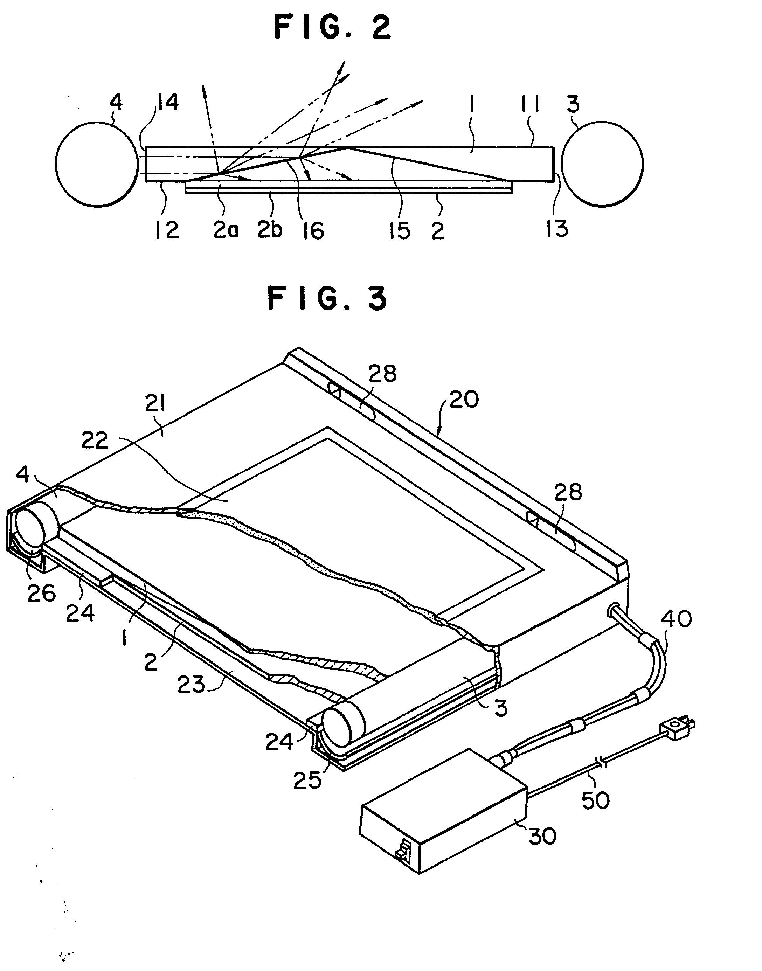

Figs. 1 and 2 in combination show an essential portion of a light source device used in a transparency apparatus in accordance with the invention. The light source device has a light guide plate 1, a reflecting mirror 2, and light sources 3, 4 such as fluorescent tubes. The light guide plate 1 is made of a transparent material such as a colorless transparent acrylic resin, and has a flat upper surface 11. As will be best seen from Fig. 2, the underside of the light guide plate 1 has a pair of tapered surfaces 15 and 16 which start at regions near the opposite longitudinal ends of the light guide plate 1 and converge upwardly, i.e., towards the upper surface 11, substantially at the lengthwise mid point of the light guide plate 1. The tapered surfaces 15 and 16 are provided with fine convexities and concavities. The reflecting mirror 2 consists of a colorless transparent plate 2a of an acrylic resin which is lined on its under side with a reflector having a reflecting surface 2b. The reflecting mirror 2 is disposed such as to oppose the tapered surfaces 15 and 16 of the light guide plate 1.  The fluorescent tubes 3 and 4 are disposed in the vicinity of respective longitudinal ends 13 and 14 of the light guide plate 1.  It is to be noted that, in Fig. 2, the thickness of the light guide plate 1 is exaggerated in comparison with the length of the same, so that the light guide plate 1 shown in Fig. 2 is expanded in the thicknesswise direction as compared with the actual case, in order to clearly show the paths of light.

According to this arrangement, most of the light coming into the light guide plate 1 through the end surfaces 13 and 14 and reaching the tapered surfaces 15 and 16 is totally reflected and radiated towards the center of the upper surface 11 of the light guide plate 1.  However, a part of the light reaching the tapered surfaces 15 and 16 is reflected irregularly and randomly towards the upper surface 11 by virture of the presence of the fine convexities and concavities.  If the light guide plate 1 does not have the tapered surfaces 15 and 16, and if there is no reflecting mirror 2, the central portion of the upper surface 11 of the light guide plate 1 which is remote  from the flurrescent lamps 3 and 4 constituting the light sources will receive a smaller quantity of light than both end portions of the same because of attenuation of the light due to long travel of the same.  According to the invention, however, partly because the totally reflected light is concentrated in the central portion of the upper surface and partly because the central portion of the upper surface 11 of the light guide plate 1 can receive a greater quantity of light reflected from the mirror 2 than both end portions of the same, the portion 17 of the upper surface 11 opposing the tapered surfaces 15 and 16 can emit the light substantially uniformly over the entire area thereof. Therefore, a transparency observation surface having a uniform light intensity distribution can be obtained by placing a translucent observation plate, e.g., the white translucent acrylic resin plate, on the portion 17 of the upper surface 11 of the light guide plate 1.

In the described embodiment of the invention, the reflecting mirror 2 has the acrylic resin plate so that the light guide plate 1 emits white light.  This, however, is not exclusive and the reflecting mirror 2 can have a transparent glass plate or a plate having a color other than white in place of the acrylic resin plate 2a, if it is not necessary to obtain white light.  It is also possible to use a material having a specific color as the material of the light guide plate 1 and the transparency observation plate so that the light guide plate 1 or the transparency observation plate are able to emit the light of the specific color.

In the illustrated embodiment of the invention, the light guide plate 1 has two tapered surfaces. The light guide plate 1, however, can have four or more such tapered surfaces or, alternatively, the underside of the light guide plate 1 may be conically concaved such that the central portion of the light guide plate has the smallest thickness.

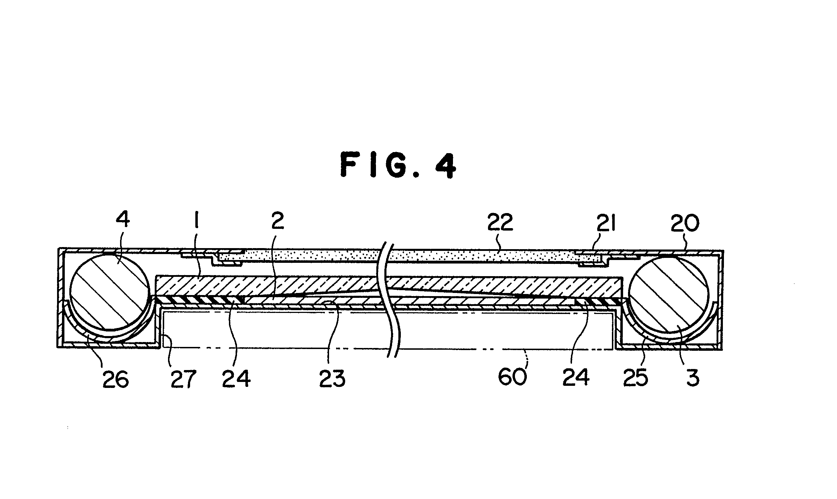

Figs. 3 and 4 show the whole portion of the transparency apparatus in accordance with the invention. The apparatus has a main part 20, a driving unit 30, a connection cord 40 and a power supply cord 50. The main part 20 is constituted by a stainless steel sheet which is bent in a substantially U-shaped cross-section such as to have recesses for receiving the fluorescent tubes 3 and 4 at both longitudinal ends thereof. The light guide tube 1 and the reflecting mirror 2 are interposed between these recesses.

The portion of the upper surface 21 of the main part 20 of the apparatus corresponding to the light-emitting portion 17 of the light guide plate 1 is opened and is covered by an observation plate 22 which is made of a white translucent acrylic resin. The main part 20 of the apparatus is protruded at its central portion such as to provide a land portion 23 of a substantial area. The reflecting mirror 2 is seated on this land portion 23, while the light guide plate 1 is placed on the land portion 23 through the intermediary of a spacer 24. Reflectors 25 and 26 each having an arcuate cross-section are disposed under the fluorescent tubes 25 and 26. The fluorescent lamps 3 and 4 are attached to the main part 20 through sockets which are not shown and are electrically connected to the driving unit 30 through the connection cord 40. The driving unit 30 is composed of a ballast, switches and other parts which are known per se, and is connected to a commercial electric power supply through the power supply cord 50.

When this transparency apparatus is used, the apparatus as a whole is placed on a digitizer such that the tablet 60 of the digitizer is received in a tablet-receiving recess 27 formed under the land portion 23 of the main part 20, and an original such as a film is placed on the observation plate 22. As the switch of the driving unit 30 is turned on, the original is uniformly illuminated by the light from the observation plate 22. Then, the user traces the image on the original by means of the position appointing device, such as a stylus pen, so that the data is inputted to the tablet 60.

In the described embodiment, the fluorescent tubes 3 and 4 constituting the light sources are disposed at both ends of the main part 20 and only the light guide plate 1 and the reflecting mirror 2 are laid under the observation plate 22. Therefore, the portion of the transparency apparatus which is to be placed on the tablet can have a small thickness on the order of 1 to 2 cm which is small enough to permit the inputting of the data from the upper side of the observation plate to the tablet under the apparatus without difficulty.

The tablet 60 of the digitizer used in combination with the transparency apparatus of the invention may be of any desired type, provided that it is sensitive to the movement of the position appointing device at a height of about 1 to 2 cm above the tablet.

In the illustrated embodiment, the tapered surfaces 15 and 16 are slightly offset to the right from the center of the light guide plate 1, in order to align the light-emitting portion of the transparency apparatus with the data input area of the tablet 60. Apertures 28 which are formed in a rear portion of the main part 20 of the apparatus permit an ultrasonic timing signal to pass therethrough from a transmitter on the position appointing device to a receiver (not shown) on the tablet 60.

Although the invention has been described through specific terms, it is to be noted here that various changes and modifications may be imparted thereto without departing from the scope of the invention which is limited solely by the appended claims.

WHAT IS CLAIMED IS

1.      Apparatus for observation of a transparency such as a photographic film placed on a translucent observation plate, comprising: a generally rectangular tabular light guide plate (1) having a flat upper surface (11), the underside of said light guide plate having at least one tapered surface (15,16) which extends from a portion of said light guide plate near a longitudinal end surface (13,14) of said light guide plate towards the other end such as to progressively approach said flat upper surface (11) of said light guide plate, the portion of said upper surface opposing said tapered surface presenting an area on which said observation plate is to be seated; and a light source means (3,4) from which a light is introduced into said light guide plate through said end surface (13,14) of said light guide plate.

2.      Apparatus according to claim 1, further comprising fine convexities and concavities formed on said tapered surface (15,16) of said light guide plate (1), and a reflecting mirror (2) disposed such as to oppose said tapered surface of said light guide plate.

3.      Apparatus according to claim 1 or claim 2, wherein said light source means has a light source (3,4) disposed in the vicinity of said end surface of said light guide plate.

4.      Apparatus according to claim 3 wherein the light source is generally aligned with and in the plane of the light guide plate (1).

5.      Apparatus according to any one of the preceding claims wherein the light guide plate (1) is made of acrylic plastics material.

# FIG. I

# FIG. 2

# FIG. 3

# FIG. 4

0167289